# EUROPEAN PATENT APPLICATION

(11) **EP 2 394 914 A1**
(43) Date of publication of application: **14.12.2011**
(21) Application number: 10461520.8
(22) Date of filing: 12.06.2010
(51) Int. Cl.: B64C 27/10, A63H 27/133

(54) **A rotorcraft with a coaxial rotor system**

(71) Applicant: Promark Sp. z o.o., 02-927 Warszawa (PL)
(72) Inventor: Jeuté, Piotr, 02-927, Warszawa (PL)
(74) Representative: Pawlowski, Adam

(57) **Abstract**

A rotorcraft with a lift-generating coaxial rotor system (110) comprising two rotors (120, 130) mounted coaxially on a main drive shaft (111), each rotor (120, 130) comprising a plurality of blades (121, 131) inclined upwards with respect to a plane perpendicular to the axis of the main drive shaft (111), wherein the planes of rotation of the rotors (120, 130), which are driven synchronously such as to rotate with the same speed in opposite directions, are fixed perpendicularly to the axis of the main drive shaft (111), the blades (121, 131) of the rotors have an asymmetrical laminar flow airfoil and a constant pitch of less than 14 degrees, and the tail of the rotorcraft comprises tail control means (140) for controlling the rotation of the rotorcraft around vertical and horizontal axes.

## Description

The present invention relates to rotorcraft with two coaxial rotors.

Typical coaxial rotor helicopters have two counter-rotating rotors mounted on concentric shafts. Due to the fact that the torques from the rotors upon the main body of the helicopter cancel out, such design does not require a tail rotor, as known from typical single rotor helicopters, to compensate the main rotor torque. Turning of such helicopters around a vertical axis, called yaw control, is achieved by varying the relative rotational speed of the rotors. Turning along a horizontal axes, called pitch and roll control, is achieved by varying the plane of rotation of the rotor blades.

Various attempts have been made to increase the stability of coaxial rotor helicopters. For example, a US patent US7204453 describes a passively stable rotorcraft, in which the rotor consists of 4 rotor blades arranged coaxially in two pairs, mounted with a constant pitch of about 20 degrees and inclined upward about 6-12 degrees to compose a rotor with a conical shape.

Despite the various attempts to improve the coaxial rotor helicopters, the problem of safe landing of such helicopters upon sudden loss of power has not been satisfactorily solved yet. In case of rotors with variable pitch blades, upon sudden loss of power, the pilot must quickly change the pitch of rotor blades to minimum, so as to induce autorotation, i.e. allow the flow of air to induce rotation of the blades. This requires an experienced pilot of high skills. In case of rotors with blades of constant pitch, the possibility of inducing autorotation is strongly dependent on the pitch angle. For example, in case of the rotor of US patent US7204453, wherein the blades have a large, constant pitch of about 20 degrees, autorotation may be impossible to achieve.

The object of the present invention is to provide a rotorcraft with two coaxial rotors, which can be easily handled by pilots or operators with little experience, in particular providing increased safety upon sudden loss of power by easier induction of autorotation, as well as much more stability and easier control as compared to typical helicopters.

The object of the invention is a rotorcraft with a lift-generating coaxial rotor system comprising two rotors mounted coaxially on a main drive shaft, each rotor comprising a plurality of blades inclined upwards with respect to a plane perpendicular to the axis of the main drive shaft, wherein the planes of rotation of the rotors, which are driven synchronously such as to rotate with the same speed in opposite directions, are fixed perpendicularly to the axis of the main drive shaft, the blades of the rotors have an asymmetrical laminar flow airfoil and a constant pitch of less than 14 degrees, and the tail of the rotorcraft comprises tail control means for controlling the rotation of the rotorcraft around vertical and horizontal axes.

The tail control means may comprise a vertical rotor configured to control rotation around the vertical axis and a pair of horizontal rotors configured to control the rotation around the horizontal axes.

The blades of the rotors of the tail control means can have a symmetrical airfoil and variable pitch.

The roots of the blades of each rotor can be mounted on an inner rim, which is connected to the main drive shaft via rim holding arms and which has a diameter larger than the width of the main body of the rotorcraft in the plane of the axis of the main drive shaft.

Each rotor of the coaxial rotor system may comprise from 3 to 40 blades.

The blades of each rotor of the coaxial rotor system may occupy from 4% to 40% of the area of the rotor plane.

The load of the blades of each rotor of the coaxial rotor system can be below 200 kg/m².

The pitch of the blades of each rotor of the coaxial rotor system can decrease in their length direction towards their tips.

The tips of the blades of each rotor of the coaxial rotor system can be connected to an outer rim.

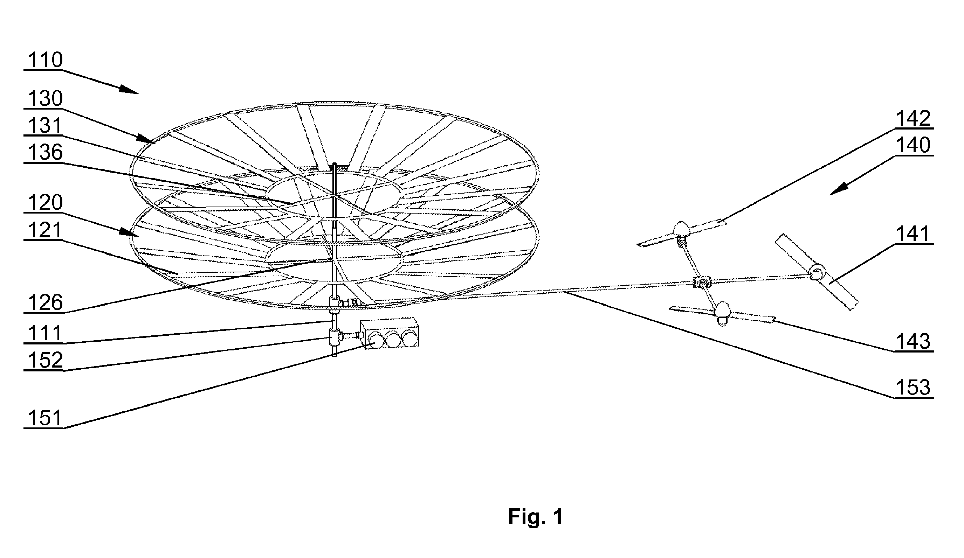

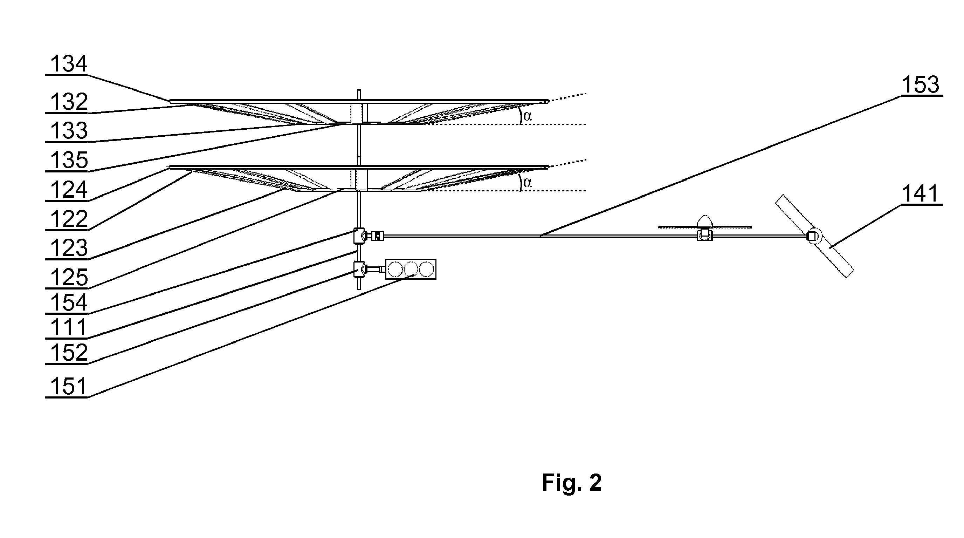

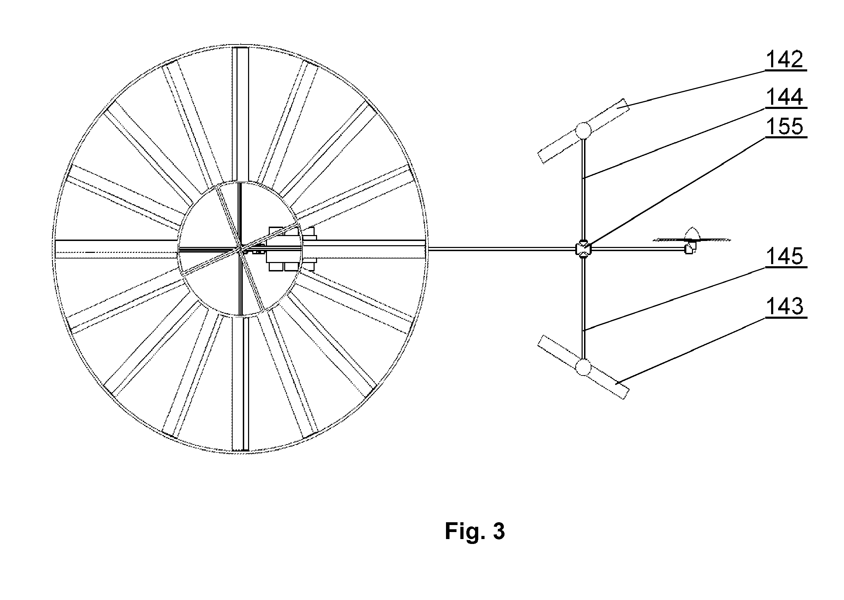

The object of the invention is shown by means of exemplary embodiments on a drawing, in which Figs. 1-3 show the schematic of the essential components of the rotorcraft according to the invention in a three-dimensional view, a side view and a top view.

The rotorcraft according to the invention, as shown in Figs. 1-3, has a lift-generating coaxial rotor system 110 comprising two rotors 120, 130 mounted coaxially on a main drive shaft 111. The rotors 120, 130 rotate in opposite directions, generating a lift force for the main body of the rotorcraft. Each rotor 120, 130 comprises a plurality of blades 121, 131 which are inclined upwards with an angle α with respect to a plane perpendicular to the axis of the main drive shaft 111. The angle of inclination α of the rotor blades 121, 131 is preferably from 2,5° to 22,5°, thereby the blades 121, 131 rotate on a conical surface having an internal angle from 175° to 135°. The angle may vary slightly due to elasticity of the blades upon wind forces during rotation of the rotors. Due to the fact that the blades 121, 131 rotate on a conical surface, the lift force generated by the blades is directed not perpendicularly to the ground but slightly sidewards, which helps reducing the air turbulence and increases the stability of the rotorcraft, especially upon take-off. Furthermore, the safety of landing is increased, as when the rotorcraft approaches ground in a tilted position, the risk of the blades hitting the ground is minimized, especially in case of high angle of inclination α.

The planes of rotation of the rotors 120, 130 are fixed perpendicularly to the axis of the main drive shaft 111, i.e. they do not change with respect to the axis of the main drive shaft 111 upon operation of the rotor, neither by change of the pitch of the blades 121, 131 nor by tilting of the whole rotors 120, 130, in contrast to a typical coaxial rotors configuration. The main driving shaft 111 is connected to the engine via an overrunning clutch (freewheel), thereby the transmission between the engine and the rotors 120, 130 is disengaged when the engine rotates with a speed lower than the rotors 120, 130. In particular, upon loss of power and stop of the engine, the rotors 121, 131 continue to rotate, so as to enable autorotation. The blades 121, 131 of the rotors 120, 130 have an asymmetrical laminar flow airfoil and a constant pitch of less than 14 degrees. The blades 121, 131 should be rigid in their longitudinal direction so as to keep the pitch constant within a given tolerance limit, such as 10% of the predetermined constant pitch. Upon loss of power, the asymmetrical laminar flow airfoil and the small pitch of the blades 121, 131 facilitate autorotation. Preferably, the number of blades 121, 131 of each rotor 120, 130 is from 3 to 40, preferably 16. By using more than two blades 121, 131 for each rotor 120, 130, the air turbulences are reduced. The total area of the blades preferably occupies from 4% to 40% of the area of the rotor plane (disc), preferably 25%. While the disc loading remains similar to the one used in small helicopters and remains in the range of 10 to 25 kg/m² (in case of large and heavy helicopters, such as heavy attack helicopters, the loads can be much higher), the blade load will be much lower than in case of typical helicopters. The blade load of typical small helicopters is above 400 kg/m². The rotors 120, 130 of the rotorcraft of the present invention are configured to have a blade load below 200 kg/m², wherein the configuration is achieved by appropriate selection of total area of the blades and pitch. This allows achieving in autorotation the descending speed of 4-5m/s, and therefore relatively safe landing. The safety of landing can be increased by providing the rotorcraft underchase with a shock absorbing system. By using asymmetrical laminar flow airfoil of large area, the aerodynamic lift is increased as compared to typical thin two-blade rotors. As the pitch of the blades 121, 131 is constant, the pilot does not have to quickly reduce the pitch as in case of typical helicopters, therefore the rotorcraft according to the invention requires less skill and can therefore be handled by less experienced pilots, as autorotation is automatically induced.

The asymmetrical laminar flow airfoil of the blades 121, 131 can be a NACA 8H12 profile or a similar one.

Preferably, the rotors 120, 130 are driven synchronously such as to rotate with the same speed in opposite directions, which further increases the stability of the rotorcraft.

The pitch of the blades 121, 131 may decrease in the length direction of the blade 121, 131 towards its tip 122, 132. Preferably, the pitch of the blades 121, 131 decreases from about 4,5° at the root 123, 133 to about 1.5° at the tip 122, 132. This further facilitates autorotation of the rotors 120, 130, because the lift and drag forces generated by the rotating blade remain substantially evenly distributed on the whole blade length, since the decrease in forward speed of a turning blade towards its root is compensated by the increase of its pitch

Preferably, the tips 122, 132 of the blades 121, 131 of each rotor 120, 130 are connected to an outer rim 124, 134. The outer rims 124, 134 increase the inertia of the rotors 120, 130 and therefore upon sudden loss of power, the rotors 120, 130 with the outer rims 124, 134 easily continue their rotation due to increased inertia, which further facilitates automatic induction of autorotation. Moreover, the outer rims 124, 134 keep a stable plane of rotation of the blades 121, 131, which allows avoiding the risk of collision between the blades of the two rotors 120, 130. Furthermore the extra mass (weight) of outer rim 124, 134 increases the inertia of the whole rotor 120, 130, which not only makes the autorotation easier and more certain, but also increase the gyroscopic stabilization force of the rotor 120, 130. The precession force of one rotor will be simultaneously compensated by the precession force of the other, counter rotating rotor, while the stabilizing effect of gyroscopic force will remain high. This adds extra stability and safety to the whole rotorcraft. In addition, by providing an even outer edge of the rotor, the risk of blades damage upon touching an external object by the rotating rotor is lowered. Furthermore, the overall stability and resistance to damage of the whole rotor system 110 is increased, which facilitates its use and servicing.

Furthermore, the roots 123, 133 of the blades 121, 131 of each rotor 120, 130 can be mounted on an inner rim 125, 135, which is connected to the main drive shaft 111 via rim holding arms 126, 136 and which has a diameter larger than the width of the main body of the rotorcraft (not shown in the drawing for clarity purposes) in the plane of the axis of the main drive shaft 111. The number of the rim holding arms 126, 136 can be the same as the number of the blades 121, 131 mounted on the inner rim 125, 135 or lower. Preferably, 4 rim holding arms 126, 136 are used. The rim holding arms 126, 136 have a symmetrical profile, do not create any lift force and their role is to support the inner rim 125, 135. Therefore, most of the air thrust is directed outside the main body of the rotorcraft, which reduces air turbulences and increases the stability of the rotorcraft. Moreover, a wide inner rim 125, 135 facilitates mounting of a higher number of blades 121, 131.

Due to the fact that the blades 121, 131 have a constant pitch, the planes of rotation of the rotors 120, 130 stay fixed and the rotors 120, 130 rotate with the same speed, the coaxial rotor system 110 produces only a lift force and does not allow to control the rotation of the rotorcraft in any direction.

The rotation of the rotorcraft is controlled at its tail, which comprises tail control means 140 for controlling the rotation of the rotorcraft around vertical and horizontal axes. The tail control means 140 comprise a vertical rotor 141 configured to control rotation around a vertical axis and a pair of horizontal rotors 142, 143 configured to control rotation around horizontal axes. The horizontal rotors are mounted on wings 144, 145 extending from opposite sides of the tail of the main body, preferably to a distance equal at least to two diameters of the horizontal rotors 142, 143. The blades of the rotors 141, 142, 143 have a symmetrical airfoil, such as e.g. NACA 0012, and variable pitch, wherein the basic pitch is 0 degrees.

The driving components of the rotorcraft are connected as follows. The main engine 151 drives, via an overrunning clutch (freewheel) 152, the main drive shaft 111, to which one rotor, e.g. 120 can be connected directly and the other rotor 130 can be connected via a planetary gear, such as to rotate with the same speed in the opposite direction. A tail shaft 153 is connected to the main shaft 111 via a transmission 154. The horizontal rotors 142, 143 are connected to he tail shaft 153 via transmissions 155. Thereby, the rotation of the tail shaft 153 is synchronized with the rotation of the main shaft 111, and therefore the rotation of rotors 141, 142, 143 is synchronized with the rotors 121, 131. Alternatively, the tail control means 140 may be driven by a dedicated engine or engines, such as electric engines, preferably synchronized via an encoder with the main drive engine.

The rotorcraft can be controlled in the following manner. By regulating the speed of rotation of the rotors 120, 130 of the main rotor system 110, the aerodynamic lift of the rotors 120, 130 is regulated, which allows for vertical ascending, descending or hover. The rotation of the rotorcraft is controlled via the tail control means 140. Changing the pitch of the vertical rotor 141 results in a turn of the tail to left or right, thereby allowing yaw control. By cyclically and collectively changing the pitch of the horizontal rotors 142, 143 the tail is turned up and down, thereby allowing pitch control. By changing the pitch of the blades of one of the horizontal rotors 142, 143 with respect to the pitch of the blades of the other horizontal rotor 142, 143, roll control is achieved.

The controls for the rotorcraft according to the invention can have a form of typical to airplanes. The speed of rotation of the rotors 120, 130 can be controlled with a throttle. Yaw control is realized via rudder pedals, pitch and roll control is realized via a control stick or a control yoke.

Therefore, a coordinated turn can be achieved in a manner similar to a typical airplane, by simultaneous use of the pedals and the control stick. Turning in horizontal flight is possible in a manner similar to an airplane. Turning in hover and flying forward or backward is realized in a manner similar, but not the same as in a helicopter. In case of typical helicopter, the plane of rotation of the lift-generating rotors changes with respect to the plane perpendicular to the main drive shaft. In case of the rotorcraft according to the present invention, the plane of rotors 120, 130 is always perpendicular to the main drive shaft 111. In order to fly forward, the rotorcraft can be tilted by the control column controlling the horizontal rotors 142, 143 and the throttle can be used to increase the speed of rotation of the lift-generating rotors 120, 130.

The reduced lift force of the rotorcraft according to the invention, due to rotor blades 121, 131 rotating across a conical surface, can be compensated with a higher-powered engine. However, the rotorcraft according to the invention can be advantageously used in applications in which the ease of control is more important than the economy of flight, lift force or speed, such as lightweight rotorcrafts, amateur rotorcrafts, toy rotorcrafts.

In particular, the present invention is advantageous for UAVs (Unmanned Aerial Vehicles) carrying light equipment, such as surveillance cameras. Due to its high stability, the rotorcraft can easily take off from and land even on moving vehicles. Furthermore the operator of such UAV will require much less training than in case of classical helicopters do not equipped with expensive and complicated computer controlled stabilization systems. Furthermore the cost of manufacturing the fully functional UAV according to present invention will be substantially lower compared to classic helicopter design. Furthermore the training of a pilot sufficient to fly and fully control a rotorcraft according to the present invention is much shorter, simpler and less expensive than in case of classical helicopter design. Furthermore the inherent stability and ease of use of the rotorcraft according to the present invention eliminates the necessity to use advanced electronics. In case the rotorcraft is provided with a classical carburetor/magneto design engine, any electronics can be avoided, which might be disrupted by the enemy by means of e.g. electro magnetic attack.

## Claims

1. A rotorcraft with a lift-generating coaxial rotor system (110) comprising two rotors (120, 130) mounted coaxially on a main drive shaft (111), each rotor (120, 130) comprising a plurality of blades (121, 131) inclined upwards with respect to a plane perpendicular to the axis of the main drive shaft (111), **characterized in that** the planes of rotation of the rotors (120, 130), which are driven synchronously such as to rotate with the same speed in opposite directions, are fixed perpendicularly to the axis of the main drive shaft (111), the blades (121, 131) of the rotors have an asymmetrical laminar flow airfoil and a constant pitch of less than 14 degrees, and the tail of the rotorcraft comprises tail control means (140) for controlling the rotation of the rotorcraft around vertical and horizontal axes.

2. The rotorcraft according to claim 1, **characterized in that** the tail control means (140) comprise a vertical rotor (141) configured to control rotation around the vertical axis and a pair of horizontal rotors (142, 143) configured to control the rotation around the horizontal axes.

3. The rotorcraft according to claim 2, **characterized in that** the blades of the rotors (141, 142, 143) of the tail control means (140) have a symmetrical airfoil and variable pitch.

4. The rotorcraft according to any of previous claims, **characterized in that** the roots (123, 133) of the blades (121, 131) of each rotor (120, 130) of the coaxial rotor system (110) are mounted on an inner rim (125, 135), which is connected to the main drive shaft (111) via rim holding arms (126, 136) and which has a diameter larger than the width of the main body of the rotorcraft in the plane of the axis of the main drive shaft (111).

5. The rotorcraft according to any of previous claims, **characterized in that** each rotor (120, 130) of the coaxial rotor system (110) comprises from 3 to 40 blades (121, 131).

6. The rotorcraft according to any of previous claims, **characterized in that** the blades (121, 131) of each rotor (120, 130) of the coaxial rotor system (110) occupy from 4% to 40% of the area of the rotor plane.

7. The rotorcraft according to any of previous claims, **characterized in that** the load of the blades (121, 131) of each rotor (120, 130) of the coaxial rotor system (110) is below 200 kg/m².

8. The rotorcraft according to any of previous claims, **characterized in that** the pitch of the blades (121, 131) of each rotor (120, 130) of the coaxial rotor system (110) decreases in their length direction towards their tips (122, 132).

9. The rotorcraft according to any of previous claims, **characterized in that** the tips (122, 132) of the blades (121, 131) of each rotor (120, 130) of the coaxial rotor system (110) are connected to an outer rim (124, 134).
